# EUROPÄISCHE PATENTANMELDUNG

(11) **EP 2 169 776 A1**
(43) Veröffentlichungstag der Anmeldung: **31.03.2010**
(21) Anmeldenummer: 08017154.9
(22) Anmeldetag: 29.09.2008
(51) Int. Cl.: H01R 13/453, H01R 13/631

(54) **Elektrische Steckverbindung**

(71) Anmelder: Delphi Technologies, Inc., Troy, Michigan 48007 (US)
(72) Erfinder: Herlitz, Martin, 42897 Remscheid (DE); Schekalla, Peter, 42329 Wuppertal (DE)
(74) Vertreter: Manitz, Finsterwald & Partner GbR

(57) **Zusammenfassung**

Die Erfindung betrifft einen Steckverbinder mit einer elektrischen Verbinder-Kontakteinheit (14), die in einer Steckrichtung (58) mit einer elektrischen Gegenstück-Kontakteinheit (54) eines korrespondierend ausgebildeten Steckverbinder-Gegenstücks (52) zur Bildung einer elektrischen Verbindung verbunden werden kann. Der Steckverbinder weist außerdem wenigstens ein Steckaufnahmemittel (18) zur Aufnahme von einem Steckeingriffsmittel (56) eines korrespondierend ausgebildeten Steckverbinder-Gegenstücks auf.
Erfindungsgemäß ist eine Abdeckung (16) für die elektrische Verbinder-Kontakteinheit vorgesehen, die wenigstens ein Abdeckungselement aufweist, das zwischen einer Abdeckposition und einer Offenposition seitlich versetzbar ausgestaltet ist. Weiterhin ist wenigstens ein mit dem wenigstens einen Abdeckungselement verbundenes Rampenelement (30) vorgesehen, das derart angeordnet ist, dass es von einem Steckeingriffsmittel (56) seitlich versetzt wird, wenn dieses während der Verbindung des Steckverbinders mit einem Steckverbinder-Gegenstück von dem Steckaufnahmemittel (18) aufgenommen wird.

## Beschreibung

Die Erfindung betrifft einen Steckverbinder mit einer elektrischen Verbinder-Kontakteinheit, die in einer Steckrichtung mit einer elektrischen Gegenstück-Kontakteinheit eines korrespondierend ausgebildeten Steckverbinder-Gegenstücks zur Bildung einer elektrischen Verbindung verbunden werden kann, und wenigstens einem Steckaufnahmemittel zur Aufnahme von einem Steckeingriffsmittel eines korrespondierend ausgebildeten Steckverbinder-Gegenstücks. Die Erfindung betrifft außerdem eine Batterie mit einem solchen Steckverbinder, ein korrespondierendes Steckverbinder-Gegenstück und eine elektrische Steckverbindung mit einem solchen Steckverbinder und einem entsprechenden Steckverbinder-Gegenstück.

Es sind elektrische Steckverbindungen aus zwei zusammenzusteckenden Einheiten bekannt, bei denen eine Einheit trichterförmige Aufnahmeöffnungen aufweist, in die beim Steckvorgang zum Beispiel stiftförmige Steckeingriffsmittel der anderen Einheit eingeschoben werden, um während des Einsteckprozesses eine möglichst optimale Ausrichtung der beiden zu verbindenden Steckeinheiten zu erhalten. Dazu sind die Aufnahmeöffnungen zum Beispiel als Fangtrichter ausgestaltet. Eine solche Steckverbindung ist aus EP 1 930 990 A1 bekannt.

Wenn die beiden zusammenzusteckenden Einheiten gerade nicht miteinander verbunden sind, liegen bei bekannten Anordnungen die elektrischen Kontakte offen. Zum Beispiel bei der elektrischen Anschlusseinheit einer Fahrzeugbatterie besteht dann die Gefahr, dass es bei Berührung der Kontakte der Anschlusseinheit durch eine Bedienperson zu elektrischen Stromschlägen kommt. Dies ist besonders gefährlich, wenn es sich um eine Hochvoltbatterie handelt, wie sie zum Beispiel bei Elektroautos zum Einsatz kommt.

Außerdem besteht bei freiliegenden elektrischen Kontakten die Gefahr eines elektrischen Kurzschlusses zum Beispiel durch Verunreinigungen oder Feuchtigkeit.

Es ist die Aufgabe der vorliegenden Erfindung, eine elektrische Steckverbindung zu ermöglichen, die einerseits ein sicheres Miteinanderverbinden zweier Steckeinheiten und andererseits einen wirksamen Schutz gegen Verletzungen oder Kurzschlüsse bietet.

Diese Aufgabe wird mit einem Steckverbinder mit den Merkmalen des Anspruches 1, mit einem elektrischen Steckverbinder-Gegenstück mit den Merkmalen des Anspruches 11 sowie mit einer elektrischen Steckverbindung mit den Merkmalen des Anspruches 13 gelöst. Unteransprüche sind auf bevorzugte Ausführungsformen gerichtet. Eine besonders vorteilhafte Verwendung des Steckverbinders bei einer Batterie ist Gegenstand des Anspruches 10.

Der erfindungsgemäße Steckverbinder zeichnet sich durch eine Abdeckung für die elektrische Verbinder-Kontakteinheit, bei der es sich zum Beispiel um eine Buchse handeln kann, aus. Die Abdeckung weist wenigstens ein Abdeckungselement auf, das zwischen einer Abdeckposition, in der es die Verbinder-Kontakteinheit zumindest in Verbindung mit anderen Abdeckungselementen abdeckt, und einer Offenposition, in der es die Verbinder-Kontakteinheit freigibt, seitlich versetzbar ausgestaltet ist.

Der Begriff "seitlich" soll im vorliegenden Text bedeuten, dass die Bewegung nicht parallel zur Steckrichtung ist, vorzugsweise senkrecht dazu.

Dabei kann die Abdeckung zum Beispiel nur ein einziges Abdeckungselement aufweisen, das die Verbinder-Kontakteinheit in der Abdeckposition vollständig abdeckt. Besonders einfach lassen sich aber Ausführungsformen realisieren, bei denen mehrere Abdeckungselemente zur vollständigen Abdeckung der Verbinder-Kontakteinheit zusammenwirken. Eine einfache Ausgestaltung sieht vor, dass genau zwei Abdeckungselemente zur Abdeckung der elektrischen Verbinder-Kontakteinheit dienen.

Mit dem einen bzw. den mehreren Abdeckungselementen ist jeweils ein Rampenelement verbunden, das derart in Einführrichtung hinter der Einführöffnung eines Steckaufnahmemittels angeordnet ist, dass es von einem Steckeingriffsmittel eines korrespondierend ausgebildeten Steckverbinder-Gegenstückes seitlich versetzt wird, wenn dieses während der Verbindung des Steckverbinders mit einem Steckverbinder-Gegenstück von dem Steckaufnahmemittel aufgenommen wird. Während des Verbindungsprozesses bewegt sich wenigstens ein Steckeingriffsmittel eines Steckverbinder-Gegenstücks durch die Einführöffnung eines Steckaufnahmemittels eines korrespondierenden Steckverbinders. Auf diese Weise wird bereits selbsttätig eine Ausrichtung von Steckverbinder und Steckverbinder-Gegenstück während des Steckprozesses erreicht. Gleichzeitig wirkt das Steckeingriffsmittel des Steckverbinders auf das Rampenelement des Abdeckungselementes und schiebt dieses zur Seite, so dass die elektrische Verbinder-Kontakteinheit freigegeben wird, um mit der Gegenstück-Kontakteinheit des Steckverbinder-Gegenstückes eine elektrische Verbindung eingehen zu können.

Die Steckeingriffsmittel sind dabei so lang, dass die Abdeckung durch das Zusammenwirken des wenigstens einen Steckeingriffsmittels mit dem jeweiligen Rampenelement bereits versetzt ist, bevor die elektrische Verbinder-Kontakteinheit des Steckverbinders und die elektrische Gegenstück-Kontakteinheit des korrespondierend ausgebildeten Steckverbinder-Gegenstücks zum Bilden des elektrischen Kontaktes zusammenkommen.

Mit dem erfindungsgemäßen Steckverbinder wird also nicht nur ein optimal ausgerichteter Steckverbindungsprozess möglich, sondern außerdem wird eine Abdeckung der elektrischen Verbinder-Kontakteinheit geöffnet, um es der elektrischen Gegenstück-Kontakteinheit des Steckverbinder-Gegenstücks zu ermöglichen mit der elektrischen Verbinder-Kontakteinheit des Steckverbinders eine elektrische Verbindung zu bilden. Vor dem Steckprozess ist die elektrische Verbinder-Kontakteinheit durch die Abdeckung sicher geschützt, so dass es zu keinen Stromschlägen oder Kurzschlüssen kommen kann.

Vorteilhafterweise ist das Abdeckungselement bzw. sind die Abdeckungselemente derart dichtend ausgestaltet, dass die Abdeckung im verschlossenen Zustand gegen die elektrische Verbinder-Kontakteinheit des Steckverbinders abgedichtet ist. Auf diese Weise wird zum Beispiel das Eindringen von Feuchtigkeit wirksam verhindert. Sind mehrere Abdeckungselemente vorgesehen, die zur Abdeckung der elektrischen Verbinder-Kontakteinheit zusammenwirken, können dazu auch Dichtungen vorgesehen sein, die die einzelnen Abdeckungselemente gegeneinander abdichten.

Die Einführöffnung des wenigstens einen Steckaufnahmemittels ist vorteilhafterweise als Fangtrichter ausgestaltet, so dass eine selbst zentrierende Ausrichtung insbesondere eines stiftförmigen Steckeingriffsmittels eines korrespondierend ausgebildeten Steckverbinder-Gegenstückes sicher und sogar bei der Blindmontage oder bei der Montage durch Roboter möglich ist.

Eine solche Ausgestaltung dient der besonders einfachen und besonders sicheren Selbstausrichtung bzw. Selbstzentrierung des Steckverbinders und des Steckverbinder-Gegenstückes während des Verbindungsprozesses.

Besonders vorteilhaft ist eine Ausführungsform, bei der der Steckverbinder schwimmend gelagert ist, das heißt in lateraler Richtung um ein gewisses Maß, zum Beispiel einige Millimeter, versetzbar ist. Bei entsprechender Dimensionierung der Fangtrichter ist es dann möglich, dass die Steckeingriffsmittel beim Eintritt in die Fangtrichter für eine Feinzentrierung sorgen, da die Fangtrichter zusammen mit dem Steckverbinder lateral optimal zu den Steckeingriffsmitteln ausgerichtet werden, was durch die schwimmende Lagerung ermöglicht wird.

Ein ähnlicher Effekt lässt sich erreichen, wenn das Steckverbinder-Gegenstück schwimmend gelagert ist.

Eine Weiterbildung des erfindungsgemäßen Steckverbinders sieht vor, dass eine Rückstellfeder derart angeordnet und/oder ausgestaltet ist, dass die seitliche Versetzung des wenigstens einen Rampenelementes zur Freigabe der elektrischen Verbinder-Kontakteinheit gegen die Federkraft dieser Rückstellfeder erfolgt. Auf diese Weise ist wirksam sicher gestellt, dass beim Trennen der elektrischen Verbindung durch Auseinanderziehen des Steckverbinders und des korrespondierenden Steckverbinder-Gegenstückes die Federkraft der Rückstellfeder dafür sorgt, dass sich das Abdeckungselement, das mit dem Rampenelement verbunden ist, wieder in seine Geschlossenstellung zurückbewegt, so dass insgesamt die Abdeckung beim Trennen des Steckverbinders und des Steckverbinder-Gegenstückes wieder verschlossen wird.

Eine weitere vorteilhafte Weiterbildung sieht eine Toleranzausgleichsfeder vor, die die elektrische Verbinder-Kontakteinheit in Richtung des Verbindungsprozesses vorspannt und eine Federkraft aufweist, die größer ist als die Steckkraft des Verbinders. Damit ist gewährleistet, dass während des Steckprozesses die elektrische Verbinder-Kontakteinheit des erfindungsgemäßen Steckverbinders ein wenig nachgeben kann, um Toleranzen ausgleichen zu können. Da die Vorspannung der Toleranzausgleichsfeder jedoch größer ist als die Steckkraft des Verbinders, ist dennoch eine sichere Steckverbindung gewährleistet.

Ein erfindungsgemäßes Steckverbinder-Gegenstück dient der elektrischen Verbindung mit einem erfindungsgemäßen Steckverbinder. Dazu weist das erfindungsgemäße Steckverbinder-Gegenstück eine elektrische Gegenstück-Kontakteinheit auf, die zur Verbindung mit einer elektrischen Verbinder-Kontakteinheit eines erfindungsgemäßen Steckverbinders dient. Das erfindungsgemäße Steckverbinder-Gegenstück weist wenigstens ein Steckeingriffsmittel auf, das mit einem Steckaufnahmemittel eines erfindungsgemäßen Steckverbinders zusammenwirkt, wenn der Steckverbinder mit dem Steckverbinder-Gegenstück verbunden wird. Das Steckeingriffsmittel bewegt sich dabei durch die Einführöffnung eines Steckaufnahmemittels eines erfindungsgemäßen Steckverbinders und schiebt ein Rampenelement und das mit diesem verbundene Abdeckungselement zur Seite, bevor die elektrische Gegenstück-Kontakteinheit mit der elektrischen Verbinder-Kontakteinheit den elektrischen Kontakt herstellt. Das Steckeingriffsmittel ist dabei so ausgestaltet, dass es über die elektrische Gegenstück-Kontakteinheit des erfindungsgemäßen Steckverbinder-Gegenstückes hinausragt, so dass die Abdeckung des Steckverbinders bereits seitlich versetzt ist, bevor die Gegenstück-Kontakteinheit und die Verbinder-Kontakteinheit die elektrische Verbindung herstellen.

Das wenigstens eine Steckaufnahmemittel des Steckverbinders bzw. das wenigstens eine Steckeingriffsmittel des korrespondierenden Steckverbinder-Gegenstücks sind vorzugsweise separat von der Verbinder-Kontakteinheit bzw. der Gegenstück-Kontakteinheit ausgestaltet.

Vorzugsweise wird die elektrische Gegenstück-Kontakteinheit des erfindungsgemäßen Steckverbinder-Gegenstückes durch einen Stecker gebildet und die Verbinder-Kontakteinheit des erfindungsgemäßen Steckverbinders durch eine Buchse.

Bei einer bevorzugten Ausführungsform ist das Steckeingriffsmittel des erfindungsgemäßen Steckverbinder-Gegenstückes stiftförmig ausgestaltet.

Eine erfindungsgemäße elektrische Steckverbindung weist einen erfindungsgemäßen Steckverbinder und ein erfindungsgemäßes Steckverbinder-Gegenstück auf.

Besonders vorteilhaft ist der erfindungsgemäße Steckverbinder und die erfindungsgemäße Steckverbindung beim Anschluss einer Batterie, insbesondere einer Fahrzeugbatterie, einsetzbar. Der erfindungsgemäße Steckverbinder sichert durch die Abdeckung, dass bei nicht angeschlossener Batterie der elektrische Anschluss der Batterie geschützt ist, so dass es weder zu Verletzungen noch zu Kurzschlüssen kommen kann. Dies ist insbesondere von Vorteil, wenn Hochvoltbatterien verwendet werden, wie sie zum Beispiel bei Elektroautos zum Einsatz kommen. Trotzdem lässt sich durch die Verwendung des erfindungsgemäßen Steckverbinders auf schnelle Weise eine elektrische Verbindung beim Einbau der Batterie herstellen.

Die Erfindung wird anhand der beiliegenden schematischen Figuren im Detail erläutert, die beispielhaft eine erfindungsgemäße Ausführungsform zeigen. Dabei zeigen
- Fig. 1: eine Fahrzeugbatterie mit offener Batterieabdeckung im seitlichen Teilschnitt,
- Fig. 2: eine teilweise in die Batterieabdeckung eingeschobene Fahrzeugbatterie im seitlichen Teilschnitt,
- Fig. 3: eine perspektivische Draufsicht auf den elektrischen Steckverbinder einer Fahrzeugbatterie in einem ersten Zustand,
- Fig. 4: eine perspektivische Draufsicht auf den elektrischen Steckverbinder einer Fahrzeugbatterie in einem zweiten Zustand,
- Fig. 5: eine teilgeschnittene Seitenansicht einer elektrischen Steckverbindung kurz vor dem Verbindungsprozess,
- Fig. 6: eine Perspektivansicht einer erfindungsgemäßen elektrischen Steckverbindung kurz vor dem Verbindungsprozess,
- Fig. 7: einen seitlichen Teilschnitt einer erfindungsgemäßen elektrischen Steckverbindung während des Verbindungsprozesses,
- Fig. 8: einen seitlichen Teilschnitt einer erfindungsgemäßen elektrischen Steckverbindung im zusammengesteckten Zustand, und
- Fig. 9: eine Aufrisszeichnung einer elektrischen VerbinderKontakteinheit.

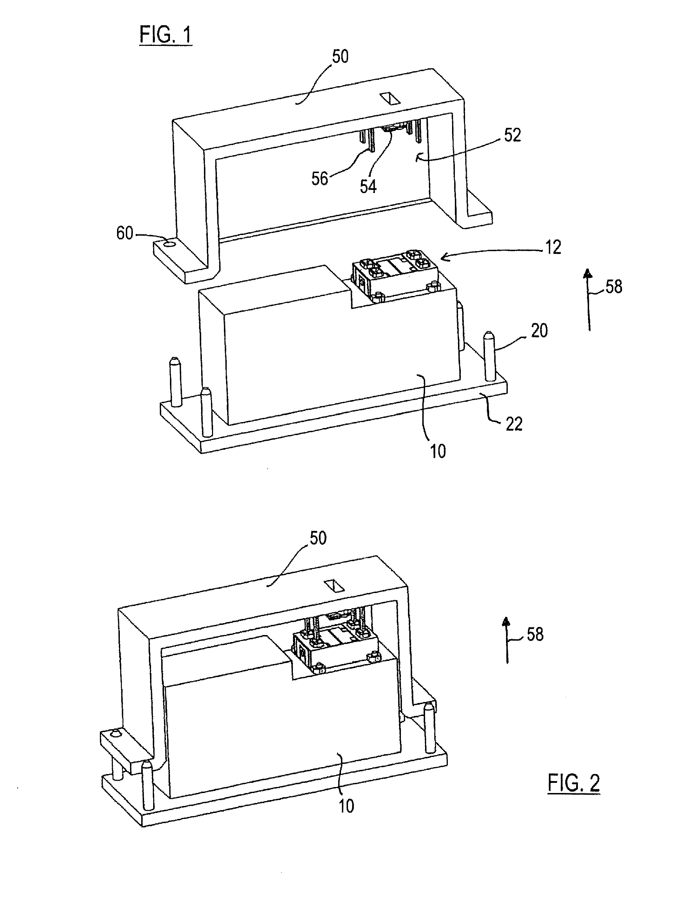

Fig. 1 zeigt eine Fahrzeugbatterie 10 zum Beispiel eines Elektroautos. Bei dem gezeigten Beispiel weist sie an ihrer Oberseite einen elektrischen Steckverbinder 12 auf, der weiter unten näher beschrieben wird. Die Fahrzeugbatterie 10 ist auf einer Montageplatte 22 montiert, die Grobzentrierstifte 20 aufweist.

In Fig. 1 ist zudem eine Batterieabdeckung 50 im Teilschnitt gezeigt, in die in Steckrichtung 58 die Batterie 10 eingesetzt werden kann, um diese einzuhausen und zu halten. Die Batterieabdeckung 50 bildet bei einer solchen Ausführungsform z.B. die Halterung für die Batterie 10 im Fahrzeug. Innerhalb der Batterieabdeckung 50 ist ein elektrisches Steckverbinder-Gegenstück 52 vorgesehen. Insbesondere erkennt man eine hier als Stecker ausgebildete elektrische Gegenstück-Kontakteinheit 54, die mit einer elektrischen Verbinder-Kontakteinheit des Steckverbinders 12 in noch zu beschreibender Weise zusammenwirkt.

Im vorliegenden Beispiel sind vier stiftförmige Steckeingriffsmittel 56 um die elektrische Gegenstück-Kontakteinheit 54 herum angeordnet. Die Batterieabdeckung 50 weist am unteren Ende vier Grobzentrieröffnungen 60 auf, die mit den Grobzentrierstiften 20 an der Montageplatte 22 zusammenwirken, um die Batterie 10 grob zu zentrieren und zu halten, wenn sie in Steckrichtung 58 in die Batterieabdeckung 50 eingeschoben wird. Im Teilschnitt der Batterieabdeckung 50, wie er in Fig. 1 sichtbar ist, sieht man nur einen Teil der Grobzentrieröffnungen 60.

Fig. 2 zeigt dieselbe Anordnung während des Einsetzens der Batterie 10 in Richtung 58. Die Grobzentrierstifte 20 treten bereits durch die Grobzentrieröffnungen 60 hindurch.

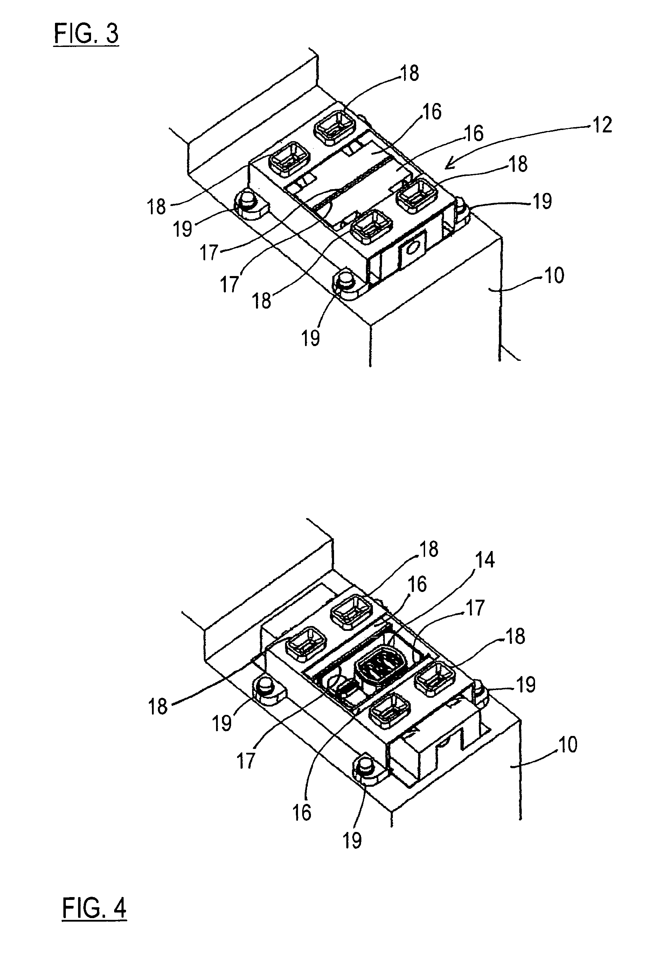

Fig. 3 zeigt eine perspektivische Draufsicht von oben auf den elektrischen Steckverbinder 12, in dem die Abdeckung geschlossen ist, die hier von zwei Abdeckungselementen 16 gebildet wird. Dabei liegen an den Kanten der Abdeckungselemente 16 vorgesehene Dichtungen 17 aneinander. Außerdem erkennt man die als Fangtrichter ausgestalteten Einführöffnungen 18, die zum Beispiel ein Innenmaß von einigen Millimetern haben können.

Außerdem sind in Fig. 3 die schwimmenden Lagerungen bzw. Befestigungen 19 des Steckverbinders 12 zu sehen. Diese Befestigungen sind derart ausgestaltet, dass sich der Steckverbinder 12 einige Millimeter lateral versetzen lässt.

Fig. 4 zeigt dieselbe Anordnung mit geöffneten Abdeckungselementen 16. Auf diese Weise ist die elektrische Verbinder-Kontakteinheit 14 zugänglich, die hier als Buchse ausgestaltet ist.

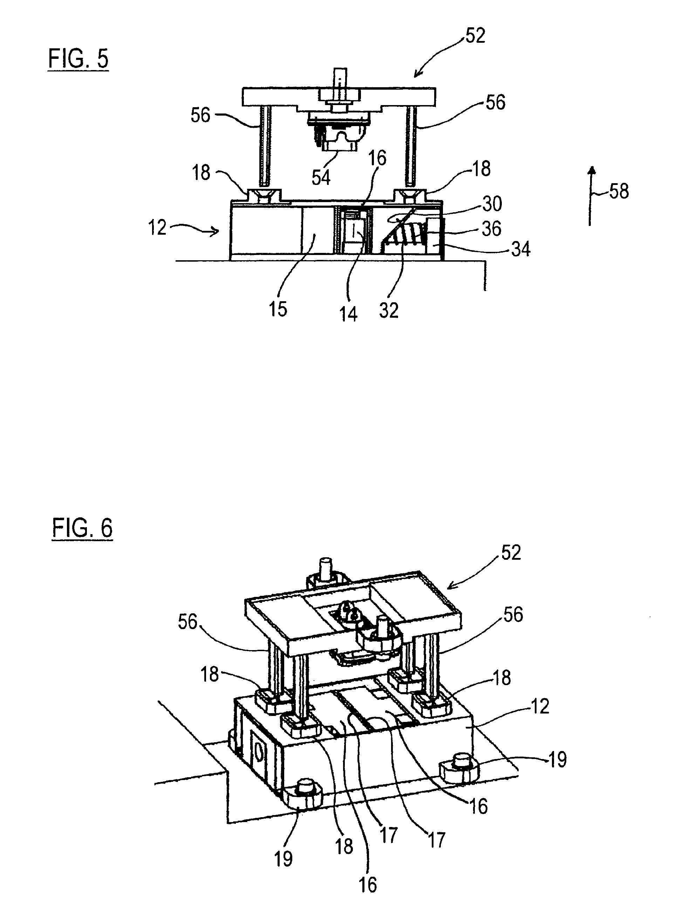

In den Fig. 5 bis 8 ist der Zusammensteckprozess dargestellt.

Fig. 5 zeigt eine Teilschnittansicht der elektrischen Steckverbindung mit dem elektrischen Steckverbinder 12 und dem elektrischen Steckverbinder-Gegenstück 52. Im Teilschnitt der Fig. 5 ist insbesondere das Rampenelement 30 erkennbar, das mit einem der Abdeckungselemente 16 verbunden ist. Die Rampe 30 ist dabei unter einem Fangtrichter 18 angeordnet. Die Rampe 30 wird über einen Federbolzen 36 und eine Feder 32 gegen eine Federhalterung 34 vorgespannt. Fig. 6 zeigt eine perspektivische Ansicht in diesem Zustand, in dem die geschlossenen Abdeckungselemente 16 erkennbar sind.

Die Abdeckungselemente 16 weisen bei dieser Ausführungsform mitverschiebbare Seitenteile 15 auf, von denen im Teilschnitt der Fig. 5 eines sichtbar ist.

Beim Eintreten der Steckeingriffsmittel 56 in die Fangtrichter 18 werden der Steckverbinder 12 und das Steckverbinder-Gegenstück 52 durch die trichterförmige Ausgestaltung der Fangtrichter 18 lateral ausgerichtet. Dies wird durch die schwimmende Lagerung des Steckverbinders 12 ermöglicht, der in Grenzen eine laterale Bewegung des Steckverbinders ermöglicht.

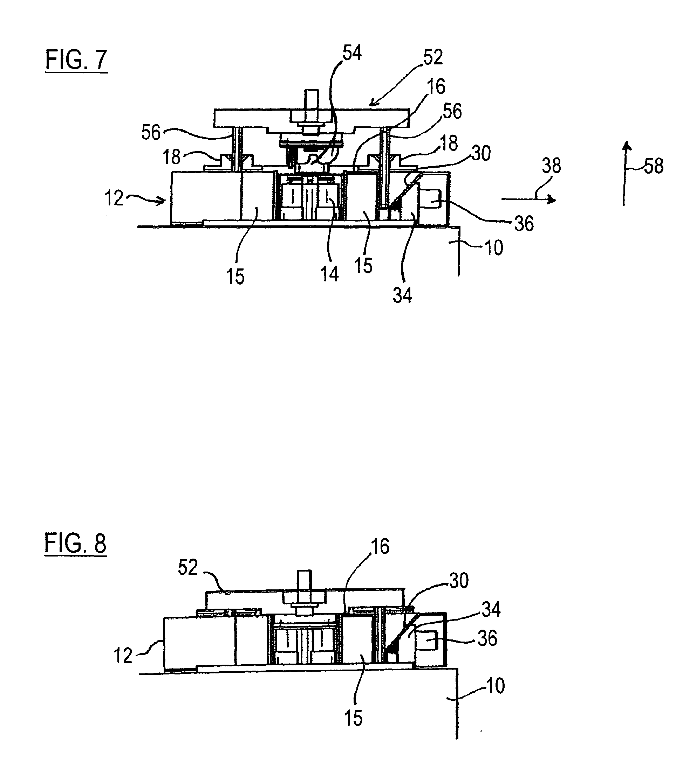

Fig. 7 zeigt einen Zustand, in dem das Steckverbinder-Gegenstück 52 bereits teilweise eingesteckt ist. Die stiftförmigen Steckeingriffsmittel 56 sind bereits durch die Fangtrichter 18 des elektrischen Steckverbinders 12 hindurch getreten, so dass das Steckverbinder-Gegenstück 52 und der Steckverbinder 12 optimal zueinander ausgerichtet sind. Die Steckeingriffsmittel 56 haben bereits die jeweilige Rampe 30 in Richtung des Pfeiles 38 nach außen gegen die Federkraft der Feder 32 geschoben. Dabei ist der Federbolzen 36 durch eine entsprechende Öffnung in der Federhalterung 34 hindurch getreten. Mit der Rampe 30 ist jeweils ein Abdeckungselement 16 nach außen gezogen worden, so dass die elektrische Verbinder-Kontakteinheit 14 freiliegt. Wie es in Fig. 7 erkennbar ist, sind die Steckeingriffsmittel 56 so lang, dass die Abdeckungselemente 16 bereits vollständig zur Seite geschoben sind, bevor die elektrische Gegenstück-Kontakteinheit 54 mit der elektrischen Verbinder-Kontakteinheit in Berührung kommt.

Fig. 8 zeigt im Teilschnitt den vollständig zusammengesteckten Zustand. Die elektrische Gegenstück-Kontakteinheit 54 ist vollständig in die elektrische Verbinder-Kontakteinheit 14 eingesteckt.

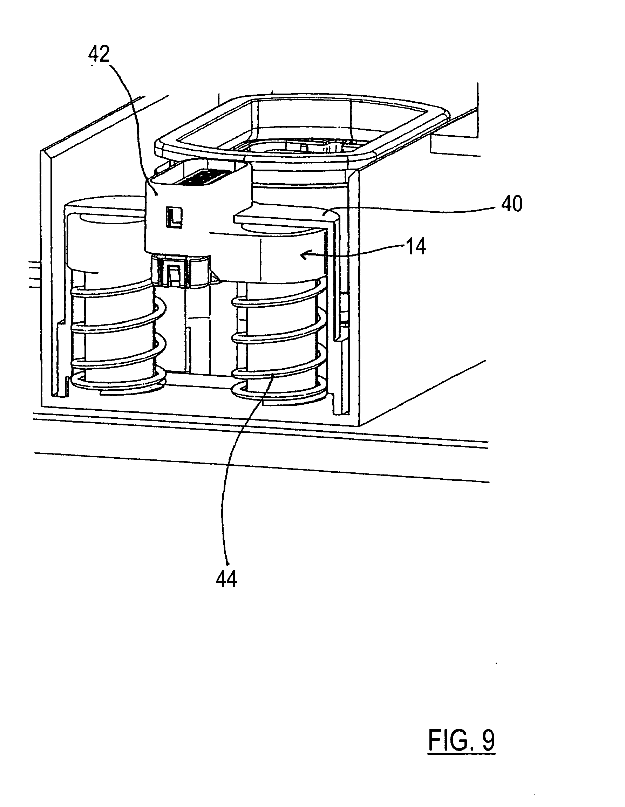

Fig. 9 zeigt ein Detail einer besonderen Ausgestaltung der elektrischen Verbinder-Kontakteinheit 14. Diese weist hier ein Verbinder-Kontakteinheit-Gehäuse 40 auf, das teilweise aufgerissen dargestellt ist. Das Steckbuchsenelement 42 ist gegen die Innenseite des Verbinder-Kontakteinheit-Gehäuses 40 durch Toleranzausgleichsfedern 44 vorgespannt. Deren Federkraft ist so gewählt, dass die Steckkraft zum Zusammenstecken der elektrischen Verbinder-Kontakteinheit 14 und der elektrischen Gegenstück-Kontakteinheit 54 weniger Kraft als die Federkraft erfordert. Trotzdem bietet die Ausgestaltung mit einer Toleranzausgleichsfeder die Möglichkeit, dass geringe Toleranzen in der Höhe der elektrischen Verbinder-Kontakteinheit 14 bzw. der elektrischen Gegenstück-Kontakteinheit 54 ausgeglichen werden. Außerdem ist ein gedämpftes Zusammenstecken möglich.

Die beschriebene erfindungsgemäße Ausführungsform der elektrischen Steckverbindung wird wie folgt eingesetzt. Die Batterie 10 wird in die Batterieabdeckung 50 in Steckrichtung 58 eingesetzt. Die Grobzentrierstifte 20 werden dabei von den Grobzentrieröffnungen 60 aufgenommen und dienen der Vorzentrierung und Ausrichtung der Batterie 10 mit Bezug zur Batterieabdeckung 50. Dieser Zustand entspricht in etwa der Fig. 2.

Beim weiteren Zusammenstecken in Richtung 58 treten die Steckeingriffsmittel 56 in die Fangtrichter 18 des Steckverbinders 12 ein und richten den Steckverbinder 12 seitlich aus. Damit ist eine optimale Ausrichtung von Steckverbinder 12 und Steckverbinder-Gegenstück 54 erreicht. Weiteres Zusammenstecken führt dazu, dass die Steckeingriffsmittel 56 auf die jeweiligen Rampen 30 treffen und diese in Richtung 38 nach außen schieben. Die nach außen versetzten Rampen 30 ziehen die Abdeckungselemente 16 mit und geben die elektrische Verbinder-Kontakteinheit 14 frei. Es wird ein Zustand etwa entsprechend der Fig. 7 erreicht. Weiteres Zusammenstecken führt dazu, dass die elektrische Gegenstück-Kontakteinheit 54 und die elektrische Verbinder-Kontakteinheit 14 aufeinander treffen. Dies wird durch die Toleranzausgleichsfeder 44 abgefedert.

Weiteres Zusammenschieben in Richtung 58 führt dazu, dass die elektrische Gegenstück-Kontakteinheit 54 vollständig von der elektrischen Verbinder-Kontakteinheit 14 aufgenommen wird, so dass ein Zustand entsprechend der Fig. 8 entsteht. Leichte Toleranzen in der Höhe der elektrischen Verbinder-Kontakteinheit 14 bzw. der elektrischen Gegenstück-Kontakteinheit 54 werden durch die Toleranzausgleichsfeder 44 ausgeglichen.

Wird die Batterie 10 wieder aus der Batterieabdeckung 50 herausgezogen, geben die Steckeingriffsmittel 56 die Rampen 30 wieder frei. Die Federn 32 sorgen dafür, dass die Rampen 30 wieder nach innen entgegen der Richtung 38 bewegt werden. Dementsprechend schließen sich die Abdeckungselemente 16 wieder, bis die Dichtungen 17 aufeinander treffen. Die elektrische Verbinder-Kontakteinheit 14 ist damit vollständig abgedeckt und abgedichtet, so dass es zu keinen elektrischen Schlägen oder Kurzschlüssen kommen kann.

Das geschilderte Beispiel einer Fahrzeugbatterie 10 mit einer Batterieabdeckung 50 ist eine besonders vorteilhafte Anwendung, wobei die erfindungsgemäße elektrische Steckverbindung auch an anderen Stellen einsetzbar ist, wo eine elektrische Verbindung möglichst einfach und sicher hergestellt werden soll und ein Anschluss im nicht zusammengesteckten Zustand abgedeckt sein soll.

Mit einer erfindungsgemäßen elektrischen Steckverbindung ist es nicht nur möglich, auf einfache Weise das Zusammenstecken zweier Steckelemente zu gewährleisten, die sich selbst ausrichten und zentrieren. Außerdem ist es möglich, eine schützende Abdeckung über den elektrischen Anschluss zum Beispiel einer Fahrzeugbatterie vorzusehen und während des Steckprozesses automatisch zu öffnen, ohne dass eine zusätzliche Handlung notwendig wäre.

Die erfindungsgemäße elektrische Steckverbindung ermöglicht insbesondere auch die Blindmontage bzw. die Robotermontage.

### Bezugszeichenliste

- 10: Fahrzeugbatterie
- 12: Steckverbinder
- 14: elektrische Verbinder-Kontakteinheit
- 15: Seitenteil
- 16: Abdeckungselement
- 17: Dichtung
- 18: Einführöffnung
- 19: schwimmende Befestigung
- 20: Grobzentrierstift
- 22: Montageplatte
- 30: seitlich verschiebliche Rampe
- 32: Feder
- 34: Federhalterung
- 36: Federbolzen
- 38: seitliche Verschiebungsrichtung
- 40: Verbinder-Kontakteinheit-Gehäuse
- 42: Steckbuchsenelement
- 44: Toleranzausgleichsfeder
- 50: Batterieabdeckung
- 52: Steckverbinder-Gegenstück
- 54: elektrische Gegenstück-Kontakteinheit
- 56: Steckeingriffsmittel
- 58: Steckrichtung
- 60: Grobzentrieröffnung

## Patentansprüche

1. Steckverbinder (12) mit
- einer elektrischen Verbinder-Kontakteinheit (14), die in einer Steckrichtung (58) mit einer elektrischen Gegenstück-Kontakteinheit (54) eines korrespondierend ausgebildeten Steckverbinder-Gegenstücks (52) zur Bildung einer elektrischen Verbindung verbunden werden kann, und
- wenigstens einem Steckaufnahmemittel zur Aufnahme von einem Steckeingriffsmittel (56) eines korrespondierend ausgebildeten Steckverbinder-Gegenstücks (52), wobei das Steckaufnahmemittel eine Einführöffnung (18) für das Steckeingriffsmittel (56) aufweist,
**gekennzeichnet durch**
- eine Abdeckung für die elektrische Verbinder-Kontakteinheit mit wenigstens einem Abdeckungselement (16), wobei das wenigstens eine Abdeckungselement zwischen einer Abdeckposition, in der es die Verbinder-Kontakteinheit (14) zumindest im Zusammenwirken mit einem oder mehreren weiteren Abdeckungselementen (16) abdeckt, und einer Offenposition, in der es die Verbinder-Kontakteinheit (14) freigibt, seitlich versetzbar ausgestaltet ist, und
- wenigstens ein mit dem wenigstens einen Abdeckungselement (16) verbundenes Rampenelement (30), das derart ausgestaltet und in Einführrichtung hinter der Einführöffnung (18) eines Steckaufnahmemittels angeordnet ist, dass es von einem Steckeingriffsmittel (56) eines korrespondierend ausgebildeten Steckverbinder-Gegenstücks (52) seitlich versetzt wird, wenn dieses während der Verbindung des Steckverbinders (12) mit einem Steckverbinder-Gegenstück (52) von dem Steckaufnahmemittel aufgenommen wird.

2. Steckverbinder nach Anspruch 1,
**dadurch gekennzeichnet, dass**
die Abdeckung durch ein einzelnes Abdeckungselement gebildet ist, das die Verbinder-Kontakteinheit (14) vollständig abdeckt.

3. Steckverbinder nach Anspruch 1,
**dadurch gekennzeichnet, dass**
die Abdeckung durch mehrere, vorzugsweise zwei Abdeckungselemente (16) gebildet wird, die zusammenwirken, um die Verbinder-Kontakteinheit (14) vollständig abzudecken.

4. Steckverbinder nach Anspruch 3,
**dadurch gekennzeichnet, dass**
wenigstens eine Dichtung (17) vorgesehen ist, die die Abdeckungselemente (16) in der Abdeckposition gegeneinander abdichtet.

5. Steckverbinder nach einem der Ansprüche 1 bis 4,
**dadurch gekennzeichnet, dass**
die Einführöffnung wenigstens eines Steckaufnahmemittels als Fangtrichter (18) zur selbstzentrierenden Ausrichtung eines Steckeingriffsmittels (56) eines korrespondierend ausgebildeten Steckverbinder-Gegenstücks (52) ausgestaltet ist.

6. Steckverbinder nach einem der Ansprüche 1 bis 5,
**dadurch gekennzeichnet, dass**
der Steckverbinder (12) schwimmend gelagert ist.

7. Steckverbinder nach Anspruch 1 bis 6,
**gekennzeichnet durch** eine Rückstellfeder (32), die derart angeordnet und/oder ausgestaltet ist, dass die seitliche Versetzung des Rampenelementes (30) zur Freigabe der elektrischen Verbinder-Kontakteinheit (14) gegen die Federkraft der Rückstellfeder (32) erfolgt.

8. Steckverbinder nach einem der Ansprüche 1 bis 7,
**gekennzeichnet durch** wenigstens eine Toleranzausgleichsfeder (44), die die elektrischen Verbinder-Kontakteinheit (14) in Richtung des Verbindungsprozesses vorspannt und eine Federkraft aufweist, die größer als die Steckkraft des Verbinders ist.

9. Steckverbinder nach einem der Ansprüche 1 bis 8,
**dadurch gekennzeichnet, dass**
die Verbinder-Kontakteinheit (14) eine Buchse umfasst.

10. Batterie, insbesondere Fahrzeugbatterie, mit einem Steckverbinder (12) nach einem der Ansprüche 1 bis 9.

11. Steckverbinder-Gegenstück (52) mit
- einer elektrischen Gegenstück-Kontakteinheit (54), vorzugsweise einem Stecker, zur Verbindung mit einer elektrischen Verbinder-Kontakteinheit (14) eines Steckverbinders (12) gemäß Anspruch 1, und
- wenigstens einem über die elektrische Gegenstück-Kontakteinheit (14) hinausragenden Steckeingriffsmittel (56) zur Aufnahme in einem Steckaufnahmemittel eines Steckverbinders (12) gemäß Anspruch 1, wenn der Steckverbinder (12) mit dem Steckverbinder-Gegenstück (52) verbunden wird.

12. Steckverbinder-Gegenstück nach Anspruch 11,
**dadurch gekennzeichnet, dass**
das wenigstens eine Steckeingriffsmittel (56) stiftförmig ausgestaltet ist.

13. Elektrische Steckverbindung mit einem Steckverbinder (12) gemäß einem der Ansprüche 1 bis 9 und einem Steckverbinder-Gegenstück (52) nach einem der Ansprüche 11 oder 12.
